# FASCICULE DE BREVET EUROPEEN

(11) **EP 0 589 778 B1**
(45) Date de publication et mention de la délivrance du brevet: **11.06.1997**
(21) Numéro de dépôt: 93402304.5
(22) Date de dépôt: 21.09.1993
(51) Int. Cl.: G01L 5/24, F16B 31/02

(54) **Elément d'assemblage et machine d'assemblage utilisant cet élément**
Montageteil und Maschine mit einem solchen Teil
Mounting element and mounting machine using this element

(30) Priorité: 25.09.1992 FR 9211459
(43) Date de publication de la demande: 30.03.1994
(73) Titulaire: Bras, Serge, F-91330 Yerres (FR)
(72) Inventeur: Bras, Serge, F-91330 Yerres (FR)
(74) Mandataire: Eidelsberg, Victor Albert

(56) Documents cités:
- EP-A- 0 381 791
- DE-A- 3 500 230
- DE-U- 9 013 847
- GB-A- 1 315 702
- US-A- 4 294 122

## Description

La présente invention se rapporte aux éléments d'assemblage tels qu'aux vis, aux rivets, aux écrous ou aux rondelles aux tirants ou aux tendeurs notamment à câble et autres éléments analogues qui subissent, lorsqu'ils sont utilisés pour assembler deux pièces, une tension de serrage. Un élément d'assemblage du type visé par l'invention peut avoir un axe de symétrie et deux faces opposées. L'invention concerne également les procédés et machines d'assemblage, ce dernier terme englobant les machines de contrôle de la tension dans les assemblages ainsi que les outils manuels.

Les procédés utilisés jusqu'ici pour mesurer la tension de serrage de deux pièces assemblées par un élément d'assemblage utilisent, soit la mesure du couple de serrage, soit la mesure de l'angle de serrage, soit la mesure conjointe du couple et de l'angle de serrage, le cas échéant assortie d'un arrêt du serrage sur la limite élastique. Toutes ces techniques renoncent à mesurer directement la force de compression ou tension de serrage, au bénéfice de paramètres secondaires à partir desquels on espère remonter à cette tension de serrage. Or, l'expérience révèle que la loi de correspondance entre ces paramètres et la tension de serrage n'est pas reproductible, de sorte que les mesures sont faussées.

Au EP-A-381791 et au U.S.-A 4^{.}294^{.}122, on propose un procédé de mesure par ultrasons pour des vis à fût surmonté d'une tête. Un capteur piézoélectrique collé sur la tête est apte à recevoir les ondes ultrasonores réfléchies par l'extrémité libre du fût, qui doit être à cet effet plane et perpendiculaire à l'axe de symétrie. Le retard de l'onde correspond à l'allongement du fût. Ce procédé compliqué n'est pas sûr.

Au GB-B- 1315702, on décrit un procédé de mesure en apposant un appareil électromagnétique sur la tête de vis. Ce procédé permet de mesurer la déformation en flexion de la tête. Il ne permet pas de mesurer une déformation radiale (perpendiculaire à l'axe) en compression ou en traction puisque l'appareil peut glisser suivant cette direction. Comme le capteur n'est pas collé sur la tête de la vis, lors de la rotation nécessaire au serrage, des instabilités de signal vont apparaître et, de ce fait interdire un asservissement. La moindre poussière venant s'interposer entre le capteur et la tête de la vis modifie les conditions de mesure et affecte le résultat d'une erreur. Le procédé ne fonctionne pas sur des matériaux non magnétiques. En outre, cet appareil est volumineux et coûteux. Un appareil de ce genre ne peut guère être affecté à un seul élément d'assemblage et être vendu avec celui-ci.

L'invention pallie ces inconvénients par un élément d'assemblage qui, tout en restant peu coûteux, peu encombrant et facile à mettre en oeuvre, permet, notamment grâce à une machine suivant l'invention, de mesurer, exactement et avec une bonne reproductibilité, un paramètre mieux représentatif de la tension de serrage réelle et moins sujet à s'en écarter.

L'élément d'assemblage suivant l'invention a deux faces opposées, un capteur de force étant apposé sur la première face de l'élément en ayant de préférence le même axe de symétrie que celui-ci. Dans le présente mémoire,on entend, par axe de symétrie, également un axe de répétition redonnant la conformation initiale par une rotation d'un angle quelconque. Suivant l'invention, le capteur est fixé par collage ou brasage sur la première face et des moyens d'appui stable de l'élément sont prévus sur la deuxième face. Lors par exemple d'un serrage, la première face de l'élément se déforme, d'une manière bien reproductible, en fonction de la tension par exemple de serrage, de sorte que le capteur qui y est fixé se déforme en flexion, mais aussi, suivant sa position, en compression ou en traction radiale, c'est-à-dire perpendiculairement à l'axe de symétrie éventuel fournit ainsi une indication bien représentative de la tension de serrage.

Comme moyens d'appui, on peut prévoir au moins trois bossages arrondis sur la seconde face de la pièce. On peut tout aussi bien prévoir à cet effet une nervure, de préférence annulaire, le cas échéant subdivisée en plusieurs arcs. Cette nervure ménage un point d'appui bien déterminé des pièces à serrer, par rapport à l'axe, et garantit ainsi la reproductibilité des résultats obtenus.

Mais le moyen d'appui peut être aussi constitué par le fait que la seconde face est rectifiée ou par le fait qu'elle est inclinée au moins en partie de l'extérieur vers l'axe de symétrie en direction de la première face de moins de 3° de manière à créer un effet de blocage par cone, lorsque l'élément s'appuie par cette seconde face sur une pièce à fixer.

De préférence, le capteur de force est constitué d'un support en céramique sur l'une des faces duquel sont déposées une couche métallique centrale et une couche métallique annulaire, réunies l'une à l'autre par une couche sensible à la déformation et conductrice de l'électricité, notamment une couche piézorésistive. On obtient ainsi un signal électrique qu'il est aisé de traiter et de transformer en un signal représentatif de la tension de serrage. Mais le capteur peut être aussi avec avantage un capteur piézoélectrique constitué, par exemple, d'un disque de matériau piézoélectrique (titanate de baryum, zirconate de plomb, quartz etc....) métallisé sur ses deux faces pour former des contacts électriques.

L'invention a indépendamment pour objet un élément d'assemblage ayant deux faces, un capteur de force étant apposé sur la première face de l'élément, caractérisé en ce que le capteur de force est constitué en céramique sur l'une des faces desquelles sont déposées une couche métallique centrale et une couche métallique annulaire, réunies par une couche sensible à la déformation et conductrice de l'électricité, notamment une couche piézorésistive.

Suivant un perfectionnement, permettant d'éviter les effets d'hystérésis et garantissant ainsi une bonne reproductibilité, le module d'élasticité de la céramique constituant le support est inférieur à celui de l'élément d'assemblage. Lors de la déformation de l'élément d'assemblage, le support en céramique épouse la déformation de la pièce au lieu de lui imposer une déformation plastique parasite. C'est ainsi que l'invention vise notamment un capteur de force dont le module d'élasticité de la céramique est inférieur à 200 GPa, notamment inférieur à 150 GPa et même à 100 GPa.

Pour se prémunir encore mieux des irrégularités des efforts sur la nervure, il est avantageux que le capteur de force soit circulaire. Cela se traduit par une compensation des écarts entre les efforts et par une simplification de la chaîne en aval de calcul et de mesure de la tension de serrage.

Mais le capteur de force peut aussi se composer d'au moins deux capteurs unitaires dont les axes longitudinaux forment un angle entre eux. A partir des signaux fournis par chacun de ces capteurs unitaires on peut, par une chaîne adéquate de calcul et de mesure en aval, mesurer correctement la tension de serrage.

L'invention vise également un procédé d'assemblage de deux pièces à l'aide d'un élément d'assemblage, ayant un axe de symétrie, dans lequel on détermine la tension de serrage en mesurant une déformation à l'aide d'un capteur de force, caractérisée en ce qu'il consiste fixer le capteur à l'élément d'asemblage par collage ou brasage et à en mesurer la déformation. En mesurant la déformation du capteur qui épouse une face de l'élément et non plus la déformation de l'élément à l'aide d'un capteur, on prend en compte toutes les déformations du capteur et donc de l'élément, et notamment le déplacement radial du capteur en plus de sa déformation en flexion, en sorte que la mesure est plus sure et bien reproductible.

L'invention vise notamment un élément d'assemblage ayant un fût surmonté d'une tête, dans lequel lesdites première et seconde faces sont ménagées sur la tête et dans lequel l'extrémité libre du fût n'est ni strictement perpendiculaire à l'axe de symétrie ni strictement centré, comme cela est nécessaire pour un procédé de mesure par ultrasons, mais est brute de cisaillement ou de frappe.

L'invention vise enfin une machine à assembler deux pièces ou plusieurs pièces à l'aide d'un élément d'assemblage tel que mentionné ci-dessus. Cette machine comprend une douille destinée à s'emmancher sur l'élément d'assemblage et munie de deux premiers contacts électriques qui sont disposés de manière à venir respectivement en contact avec la couche métallique centrale et la couche métallique annulaire et entre lesquels est connectée une chaîne de mesure donnant un signal en fonction de la déformation du capteur, sous l'effet de la tension de serrage subie par les deux pièces.

Suivant un mode de réalisation d'un très grand intérêt pour un assemblage vissé, la chaîne de calcul et de mesure comporte un circuit à capteur de couple, destiné à corriger le signal du signal parasite induit par le couple appliqué par une clé de serrage à l'élément d'assemblage, lors de l'assemblage des deux pièces. On constate, en effet, d'une manière inattendue, que le couple appliqué par une clé de serrage fournit sur la machine un signal parasite qu'il convient d'éliminer.

Pour prévenir l'influence des résistances de contacts, il est prévu une source de courant connectée entre la couche métallique centrale et la couche métallique annulaire, par deux seconds contacts autres que les premiers contacts.

La chaîne de mesure peut comporter un circuit de commande de la clé de serrage interrompant la rotation de celle-ci lorsque la tension par exemple de serrage souhaitée est atteinte. Grâce à cela, on peut maintenant serrer des vis, des rivets, des écrous ou autre, avec une tension de serrage prescrite, d'une manière bien reproductible on tendre des tendeurs ou des tirants.

On préfère de beaucoup coller le capteur sur la face de l'élément d'assemblage, mais on peut également l'obtenir par dépôt. Un procédé de fabrication d'un capteur suivant l'invention consiste à sérigraphier d'abord les contacts sur le substrat, par exemple avec une pâte argent-palladium, à sécher dans un four, puis à cuire à 850°C environ pendant 10 minutes environ. Une fois les substrats refroidis, on sérigraphie la partie résistive du capteur, puis on la sèche et on la cuit à 850°C pendant 10 minutes environ.

Au dessin annexé, donné uniquement à titre d'exemple :
la figure 1 est une vue en élévation d'un assemblage mettant en oeuvre un élément d'assemblage suivant l'invention,
la figure 2 est une vue en coupe d'un capteur de force collé sur un élément d'assemblage suivant l'invention,
la figure 3 est une vue en plan d'une variante de capteur de force,
la figure 4 est un schéma d'une machine suivant l'invention, et
la figure 5 est un schéma électrique illustrant une variante d'une machine suivant l'invention.
la figure 6 est une vue en plan d'une variante de capteur de force.
Les figures 7 et 8 sont des schémas de deux éléments d'assemblage suivant l'invention.

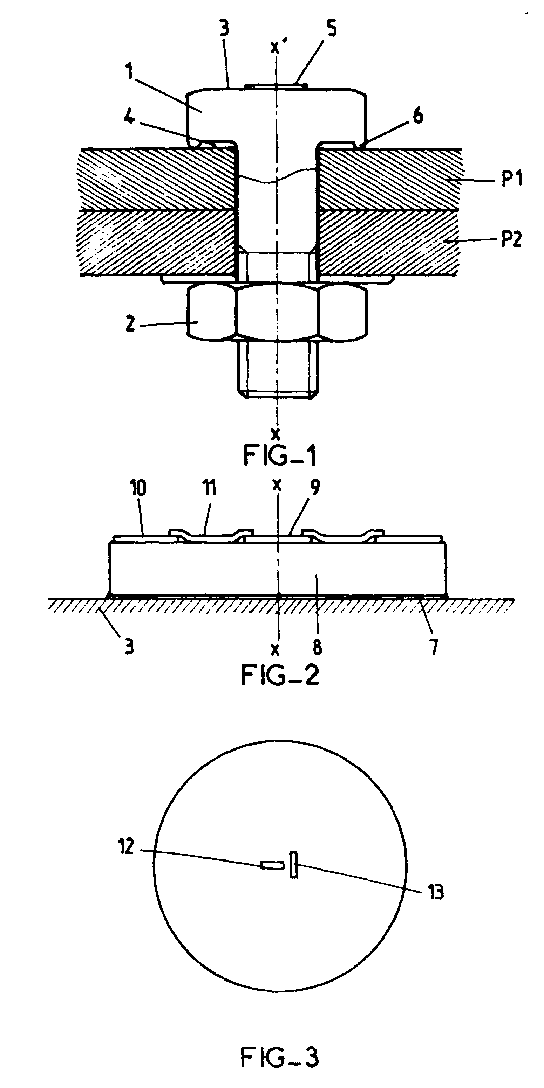

A la figure 1, deux pièces P1, P2 (ou deux parties d'une même pièce) à faces parallèles sont serrées entre une vis 1 et un écrou 2 d'axe de symétrie X, X' commun. La vis est en acier V300 d'Aubert et Duval comprenant en poids 0,45% de Co, 1,48% de Si, 0,68% de Mn, 0,65% de Cr et 0,24% de Mo, le reste étant du fer. Cet acier traité a une résistance de 1800 N/mm² et un module d'élasticité de 210 GPa. La tête de la vis comporte une face 3 supérieure et une face 4 inférieure sensiblement perpendiculaires à l'axe X, X' et opposées entre elles. Un capteur de force 5, de forme symétrique, est collé sur la face 3 et est symétrique par rapport à l'axe X, X'. La colle de moins d'un micron d'épaisseur est une colle époxy fournie par Epotechny 10 impasse Latécoère 78140 Vélizy sous le nom de EPO-TEK 353 NO. Une nervure annulaire 6 arrondie est ménagée sur la face 4.

La figure 2 est une vue plus détaillée du capteur de force 5. Il est collé à la face 3 par une couche 7 de colle et se compose d'un support 8 en céramique, d'un module d'élasticité égal à 125 GPa. Sur la face du support 8 opposé à celle par laquelle il est en contact avec la couche de colle, sont constituées par sérigraphie une couche métallique 9 centrale et une couche métallique 10 annulaire, réunies l'une à l'autre par une couche piézorésistive 11. Le capteur de force a une forme circulaire. Dans une variante peu coûteuse, les contacts sont constitués d'une pastille centiale et d'une partie annulaire reliés entre elles par de nombreux rayons.

A la figure 3, le capteur de force a également une forme circulaire et il est prévu, sur l'une de ses faces, deux capteurs unitaires 12, 13 dont les axes longitudinaux forment un angle droit entre eux. Les capteurs 12 et 13 ont une longueur qui est petite par rapport aux rayons de la tête de la vis, en étant inférieure par exemple au dixième de celui-ci.

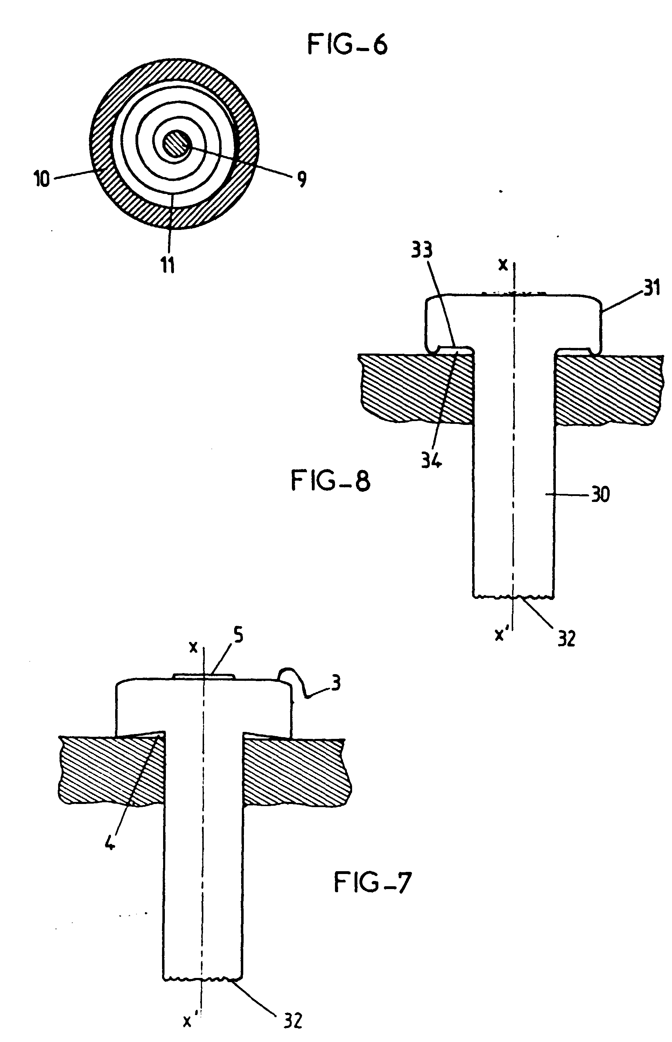

A la figure 6, la couche piézorésistive 11 du capteur de force 5 a la forme d'une spirale tournant dans le sens des aiguilles d'une montre en partant du centre. Cette forme permet de corriger, au moins partiellement, l'effet du signal parasite induit par la clé de serrage se vissant dans le sens horaire.

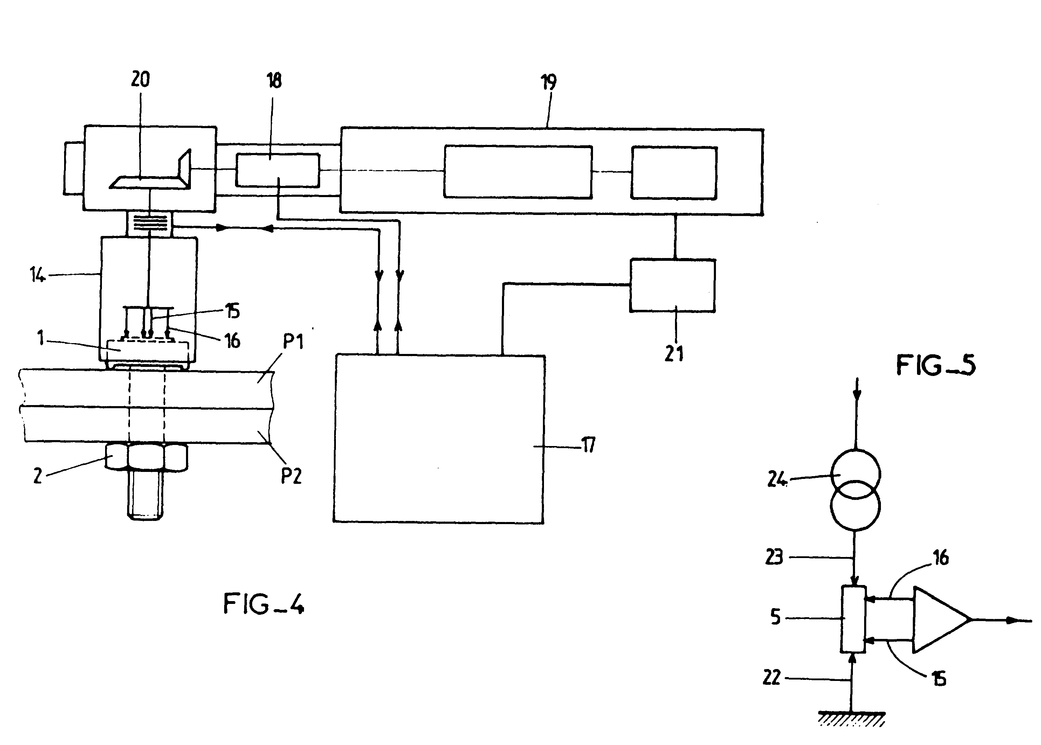

La machine représentée schématiquement à la figure 4 comporte une douille 14 destinée à s'emmancher sur l'élément d'assemblage 1 et munie de deux premiers contacts 15, 16, électriques, qui sont disposés de manière à venir respectivement en contact avec la couche métallique 9 centrale et la couche métallique 10 annulaire. Entre ces contacts est connectée une chaîne de calcul et de mesure 17 donnant un signal en fonction de la déformation du capteur de force, sous l'effet de la tension de serrage subie par les deux pièces P1, P2.

Entre la chaîne 17 et les contacts 15, 16, est monté un circuit 18 à capteur de couple destiné à corriger le signal fourni à la chaîne de mesure 17 du signal parasite induit par le couple appliqué par une clé de serrage à l'élément d'assemblage, lors de l'assemblage des deux pièces P1, P2. La clé peut être la douille 14 ou être une clé distincte appliquée à l'écrou 2, la douille 14 de maintien et de mesure étant toutefois toujours présente.

Un motoréducteur 19 commande, par l'intermédiaire de pignons coniques 20, la douille 14 de manière à faire tourner la vis 1. La chaîne de mesure 17 comporte également un circuit de commande 21 qui commande le motoréducteur 19, de manière à interrompre la rotation de la douille 14 servant de clé de serrage, lorsque la tension de serrage souhaitée est atteinte. La tension de serrage mesurée peut étre transmire à l'opérateur par une interface sonore, visuelle ou autre.

A la figure 5, le capteur de force 5 est toujours relié à la chaîne 17 par les contacts 15 et 16, mais est également relié par des contacts 22 et 23, d'une part à une source de courant 24 régulée et, d'autre part, au potentiel zéro du système de mesure. Grâce à cela, une résistance de contact fortuite en 22, 23 est sans influence sur le signal fourni par le capteur de force à la chaîne 17.

A la figure 7, les moyens d'appui sont constitués par le fait que la seconde face 4 est inclinée de 1° de l'extérieur vers l'axe XX' en se rapprochant de la première face 3 sur laquelle se trouve le capteur 5. A la figure l'inclinaison a été très exagérée.

L'assemblage représenté à la figure 8 comprend un fût 30 surmonté d'une tête 31. L'extrémité 32 libre du fût n'est pas plane, elle est brute de ciscaillage. Sur la face 33 inférieure de la tête 31 est collé un capteur 34 de force annulaire. Lors du vissage de la vis, ce capteur 34 se déforme en traction dans la direction radiale.

## Revendications

1. Elément d'assemblage ayant un axe de symétrie et deux faces (3,4), un capteur (5) de force étant apposé sur la première face de l'élément, caractérisé en ce que le capteur de force est constitué d'un support (8) en céramique sur l'une des faces duquel sont déposées une couche métallique (9) centrale et une couche métallique (10) annulaire, réunies l'une à l'autre par une couche (11) sensible à la déformation et conductrice de l'électricité.

2. Elément suivant la revendication 1, caractérisé en ce que le module d'élasticité de la céramique constituant le support (8) est inférieur à celui de l'élément d'assemblage.

3. Elément suivant la revendication 2, caractérisé en ce que le module d'élasticité de la céramique est inférieur à 200 GPa.

4. Elément suivant l'une des revendications 1 à 3, caractérisé en ce que le capteur a une couche (11) piézorésistive en spirale.

5. Elément suivant l'une des revendications précédentes, caractérisé en ce que le capteur de force se compose d'au moins deux capteurs unitaires (12,13) dont les axes longitudinaux forment un angle entre eux.

6. Machine à assembler deux pièces (P1, P2), à l'aide d'un élément d'assemblage (1) suivant les revendications 1 à 5, caractérisée en ce qu'elle comprend une douille (14) destinée à s'emmancher sur l'élément d'assemblage (1) et munie de deux premiers contacts (15,16) électriques, qui sont disposés de manière à venir respectivement en contact avec la couche métallique (9) centrale et la couche métallique (10) annulaire et entre lesquels est connectée une chaîne de mesure (17) donnant un signal en fonction de la déformation du capteur de force (5), sous l'effet de la tension de serrage subie par les deux pièces (P1, P2).

7. Machine suivant la revendication 6, caractérisée en ce que la chaîne de mesure (17) comporte un circuit (18) à capteur de coupe destiné à corriger le signal du signal parasite induit par le couple appliqué par une clé de serrage à l'élément d'assemblage, lors de l'assemblage des deux pièces (P1, P2).

8. Machine suivant la revendication 6 ou 7, caractérisée par une source de courant (24) connectée entre la couche métallique (9) centrale et la couche métallique (10) annulaire par deux seconds contacts (22, 23) autres que les premiers contacts (15, 16).

9. Machine suivant la revendication 6, 7 ou 8, caractérisée en ce que la chaîne de mesure comporte un circuit de commande (21) de la clé de serrage interrompant la rotation de celle-ci, lorsque la tension de serrage souhaitée est atteinte.

## Patentansprüche

1. Verbindungselement mit einer Symmetrieachse und zwei Stirnflächen (3,4), einem Kraftaufnehmer (5), der an der ersten Stirnfläche des Elements angebracht ist, dadurch gekennzeichnet, daß der Kraftaufnehmer von einem Träger (8) aus Keramik gebildet wird, auf dessen einer Seite eine zentrale Metallschicht (9) und eine ringförmige Metallschicht (10) abgeschieden sind, die miteinander durch eine auf Formänderung ansprechende und elektrisch leitende Schicht (11) verbunden sind.

2. Element nach Anspruch 1, dadurch gekennzeichnet, daß der Elastizitätsmodul der die Unterlage (8) bildenden Keramik niedriger ist als der des Verbindungselements.

3. Element nach Anspruch 2, dadurch gekennzeichnet, daß der Elastizitätsmodul der Keramik niedriger ist als 200 GPa.

4. Element nach einem der Ansprüche 1 bis 3, dadurch gekennzeichnet, daß der Aufnehmer eine spiralförmig gewundene piezoresistive Schicht (11) aufweist.

5. Element nach einem der vorhergehenden Ansprüche, dadurch gekennzeichnet, daß der Kraftaufnehmer aus mindestens zwei einzelnen Aufnehmern (12,13) zusammegensetzt ist, deren Längsachsen einen Winkel miteinander einschließen.

6. Vorrichtung zum Verbinden zweier Teile (P1, P2) mit Hilfe eines Verbindungselements (1) nach den Ansprüchen 1 bis 5, dadurch gekennzeichnet, daß sie eine Büchse (14) aufweist, die das Verbindungselement (1) umschließen soll und die mit zwei ersten elektrischen Kontakten (15 bzw. 16) versehen ist, die so angeordnet sind, daß sie mit der zentralen Metallschicht (9) bzw. mit der ringförmigen Metallschicht (10) in Kontaktberührung kommen können, und an die eine Meßkette (17) angeschlossen ist, die ein Signal in Abhängigkeit von der Verformung des Kraftaufnehmers (5) abgibt, die dieser unter der Wirkung der Anpreßkraft erfährt, der die beiden Teile (P1, P2) ausgesetzt sind.

7. Vorrichtung nach Anspruch 6, dadurch gekennzeichnet, daß die Meßkette (17) einen Drehmomentaufnehmerkreis (18) aufweist, der dazu dient, das Signal des Störsignals zu korrigieren, das von dem durch einen Spannschlüssel bei dem Verbinden der beiden Teile (P1, P2) auf das Verbindungselement ausgeübten Drehmoment hervorgerufen wird.

8. Vorrichtung nach Anspruch 6 oder 7, gekennzeichnet durch eine Stromquelle (24), die an die zentrale Metallschicht (9) und die ringförmige Metallschicht (10) durch zwei von den ersten Kontakten (15,16) verschiedene zweite Kontakte (22,23) angeschlossen ist.

9. Vorrichtung nach Anspruch 6, 7 oder 8, dadurch gekennzeichnet, daß die Meßkette eine Steuerschaltung (21) für den Spannschlüssel enthält, die dessen Drehung unterbricht, wenn die geforderte Anpreßkraft erreicht ist.

## Claims

1. An assembly component having a symmetry axis and two faces (3,4), a force sensor (5) being positioned on the first face of the component, characterized in that the force sensor (5) comprises a ceramic support (8) on one of the faces of which are deposited a central metallic layer (9) and an annular metallic layer (10), joined to each other by a layer (11) sensitive to deformation and electrically conductive.

2. Component according to claim 1, characterized in that the elasticity modulus of the ceramic constituting the support (8) is less than that of the assembly component.

3. Component according to claim 2, characterized in that the elasticity modulus of the ceramic is less than 200 GPa.

4. Component according to claim 2, characterized in that the sensor has a spiral-shaped piezoresistive layer (11).

5. Component according to any one of the preceeding claims, characterized in that the force sensor (5) comprises at least two separate sensors (12,13) the longitudinal axes of which form an angle to each other.

6. Machine for connecting two pieces (P₁,P₂) by means of an assembly component (1) according to claims 1 to 5, characterized in that it comprises a socket (14) intended to fit onto an assembly component (1) and provided with two first electrical contacts (15,16) which are disposed so as to come into contact respectively with the central metallic layer (9) and the annular metallic layer (10) and between which is connected a measuring chain (17) giving a signal as a fonction of the deformation of the force sensor (5), under the effect of the tightening tension to which the two pieces (P₁,P₂) are subjected.

7. Machine according to claim 6, characterized in that the measuring chain includes a torque-sensing circuit (18) intented to correct the signal of a parasitic signal induced by the torque applied to the assembly component by a wrench, during the connection of the two pieces (P₁,P₂).

8. Machine according to claim 6 or 7, characterized by a current source (24) connected between the central metallic layer (9) and the annular metallic layer (10) by two second contacts (22,23) other than the first contacts (15,16).

9. Machine according to claim 6,7 or 8, characterized in that the measuring chain includes a control circuit (21) for the wrench interrupting the rotation of the latter when the desired tightening tension is reached.
